(19) Europäisches Patentamt / European Patent Office / Office européen des brevets

(11) **EP 3 826 871 B1**

(12) **FASCICULE DE BREVET EUROPEEN**

(45) Date de publication et mention de la délivrance du brevet:
**07.09.2022 Bulletin 2022/36**

(21) Numéro de dépôt: **19745073.7**

(22) Date de dépôt: **19.07.2019**

(51) Classification Internationale des Brevets (IPC):
*B60K 1/04* $^{(2019.01)}$    *H01M 10/613* $^{(2014.01)}$
*B60K 1/00* $^{(2006.01)}$    *H01M 10/6566* $^{(2014.01)}$
*H01M 10/617* $^{(2014.01)}$    *H01M 10/625* $^{(2014.01)}$
*H01M 10/0525* $^{(2010.01)}$    *H01M 50/20* $^{(2021.01)}$

(52) Classification Coopérative des Brevets (CPC):
**B60K 1/04; H01M 10/613; H01M 10/617;
H01M 10/625; H01M 10/6566; H01M 50/20;**
B60K 2001/005; B60K 2001/0438; H01M 10/0525;
Y02E 60/10

(86) Numéro de dépôt international:
**PCT/EP2019/069471**

(87) Numéro de publication internationale:
**WO 2020/020764 (30.01.2020 Gazette 2020/05)**

(54) **DISPOSITIF DE CARTER D'UNE BATTERIE**

BATTERIEGEHÄUSEVORRICHTUNG

BATTERY HOUSING DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.07.2018 FR 1856899**

(43) Date de publication de la demande:
**02.06.2021 Bulletin 2021/22**

(73) Titulaire: **Renault s.a.s**
**92100 Boulogne Billancourt (FR)**

(72) Inventeurs:
• **ROBIN, Christophe**
**92130 Issy-les-Moulineaux (FR)**
• **DERDICHE, Sabri**
**94400 Vitry sur Seine (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
**EP-A1- 2 273 582    EP-A1- 2 749 444
US-A- 5 639 571    US-A1- 2015 200 430**

**Description**

L'invention concerne un dispositif de carter pour batterie, notamment pour batterie de véhicule automobile, en particulier pour batterie d'alimentation d'un moteur d'entraînement du véhicule automobile. L'invention porte aussi sur un ensemble comprenant une batterie et un tel dispositif de carter. L'invention porte encore sur un châssis ou une caisse de véhicule automobile comprenant un tel dispositif de carter et/ou un tel ensemble. L'invention porte enfin sur un véhicule automobile comprenant un tel dispositif de carter et/ou un tel ensemble et/ou un tel châssis ou caisse. Les normes de limitation d'émission de gaz à effet de serre entraînent un développement des véhicules électriques et hybrides.

Afin de limiter les émissions de gaz à moindre coût, les constructeurs automobiles peuvent réaliser une hybridation de certains de leurs véhicules à combustion interne en ajoutant un moteur électrique d'entraînement du véhicule et une batterie électrique d'alimentation de ce moteur. Dans certains cas, cette hybridation peut être réalisée en modifiant et adaptant des plateformes-véhicules existantes, dédiées aux motorisations thermiques. Par conséquent, l'espace alloué à la batterie électrique (en général, de type batterie lithium-ion) ne correspond pas à une zone optimisée pour la vie de cette batterie (prolongement maximal de la durée de vie et des performances du dispositif). L'implantation de la batterie est subie par les équipes de développement : elle doit être implantée dans les zones disponibles, impliquant un minimum de modifications de l'architecture du véhicule thermique sur la base duquel le véhicule hybride est conçu. Afin de ne pas empiéter sur le volume du coffre et ne pas remettre en cause la présence d'une roue de secours, un positionnement de la batterie en sous-caisse est souvent envisagé.

Différentes technologies de batteries sont utilisées pour assurer la traction des véhicules électriques ou hybrides. Le meilleur compromis entre énergie et puissance est obtenu avec les batteries à cellules lithium-ion. Lors de l'étape de décharge (roulage du véhicule), la migration des ions lithium libère de la chaleur qu'il faut évacuer du dispositif de batterie pour éviter le vieillissement prématuré de la batterie. Ceci est d'autant plus vrai pour les petites batteries de véhicules hybrides (de type 48V, masse : environ 20 kg) dans lesquelles transitent des puissances importantes (10/20 kW) responsables d'un échauffement rapide de celles-ci. La durée de vie de la batterie dépend en particulier de sa température de fonctionnement. Les mécanismes physico-chimiques qui se déroulent à hautes températures sont susceptibles de dégrader la batterie.

Un système d'hybridation peut être déployé sur différents modèles d'une gamme de véhicules. Les emplacements disponibles pour son implantation peuvent alors varier d'un modèle de véhicule à un autre. Si le dispositif de batterie du véhicule est refroidi de manière active (avec de l'air ou un liquide réfrigérant), la régulation en température de celui-ci peut être réalisée de manière efficace, quelle que soit la localisation du dispositif de batterie.

Dans le cas d'un refroidissement passif de la batterie, l'efficacité du refroidissement est fortement tributaire de la position de la batterie. Ainsi, dans une configuration donnée, le refroidissement passif peut être efficace, mais dans une configuration différente, il peut se révéler insuffisant.

On connaît par exemple de la demande FR2999809A1 un dispositif de batterie comportant une gorge sur sa surface extérieure inférieure. L'ouverture de la gorge est orientée vers l'avant du véhicule, de sorte qu'un flux d'air pénètre naturellement dans la gorge dès lors que le véhicule roule.

D'une part, cette gorge a le désavantage de fonctionner pour une orientation donnée du dispositif de batterie relativement au véhicule. En effet, si le dispositif de batterie est implanté à un endroit différent sous le véhicule, la gorge peut ne plus assurer son rôle.

D'autre part, cette gorge a le désavantage de refroidir le dispositif de batterie en permanence, quelle que soit la température extérieure et la température de la batterie. En cas de grand froid, cela peut pénaliser le fonctionnement de la batterie.

La demande de brevet US2015/200430A1 divulgue un dispositif présentant des inconvénients similaires.

Le but de l'invention est de fournir un dispositif de carter d'une batterie remédiant aux inconvénients ci-dessus et améliorant les dispositifs de carter connus de l'art antérieur. En particulier, l'invention permet de réaliser un dispositif de carter dont l'efficacité de refroidissement est quasiment insensible à la position du dispositif. Selon un autre aspect, l'invention permet de réaliser un dispositif de carter permettant d'éviter un refroidissement d'une batterie qui ne devrait pas être refroidie.

Selon l'invention, un dispositif de carter pour batterie, notamment pour batterie de véhicule automobile, comprend une face munie d'une pluralité de picots, notamment munie d'un réseau de picots.

La face peut être plane ou sensiblement plane et/ou la face peut être horizontale ou sensiblement horizontale.

Les picots peuvent s'étendre perpendiculairement ou sensiblement perpendiculairement à la face.

Les picots peuvent avoir une dimension longitudinale supérieure à 1 mm, notamment comprise entre 5 mm et 30 mm, de préférence environ 10 mm et/ou les picots peuvent avoir une dimension transversale comprise entre 3 mm et 20 mm, notamment entre 5 mm et 10 mm, de préférence environ 6 mm.

Les picots peuvent avoir chacun une forme cylindrique ou sensiblement cylindrique.

Le réseau de picot peut être un réseau régulier, notamment un réseau régulier basé sur un motif en losange ou en triangle ou en carré ou en rectangle.

Les picots peuvent être reliés par des nervures, notamment des nervures organisées parallèlement à une première direction et/ou à une deuxième direction et/ou à une troisième direction.

Les nervures peuvent avoir une hauteur inférieure à 0.5 fois la dimension longitudinale des picots.

Le dispositif comprend un élément de modification de l'exposition de la pluralité de picots à un flux de fluide, notamment à un flux d'air.

L'élément de modification de l'exposition comprend au moins un actionneur de déplacement de la face munie de la pluralité de picots. L'élément de modification de l'exposition peut comprendre au moins un actionneur de déplacement d'un volet relativement à la face munie de la pluralité de picots.

Le volet peut être déplaçable en translation ou en rotation.

Le volet peut être déplaçable en rotation autour d'un axe perpendiculaire à la direction d'extension des picots ou autour d'un axe parallèle à la direction d'extension des picots.

Selon l'invention, un ensemble comprend une batterie et un dispositif de carter tel que défini précédemment.

Selon l'invention, un châssis ou une caisse de véhicule automobile comprend un dispositif de carter tel que défini précédemment et/ou un ensemble tel que défini précédemment.

Selon l'invention, un véhicule automobile comprend un dispositif de carter tel que défini précédemment et/ou un ensemble tel que défini précédemment et/ou un châssis ou caisse tel que défini précédemment.

Le dessin annexé représente, à titre d'exemples, quatre modes de réalisation d'un dispositif de carter.

La figure 1 représente schématiquement un premier mode de réalisation d'un véhicule automobile.

La figure 2 représente schématiquement un deuxième mode de réalisation d'un véhicule automobile.

La figure 3 représente schématiquement un troisième mode de réalisation d'un véhicule automobile.

La figure 4 représente schématiquement un quatrième mode de réalisation d'un véhicule automobile.

La figure 5 est une vue de dessous d'un exemple de carter de batterie pouvant être utilisé dans n'importe lequel des modes de réalisation.

La figure 6 est une vue de détail d'une partie de la figure 5.

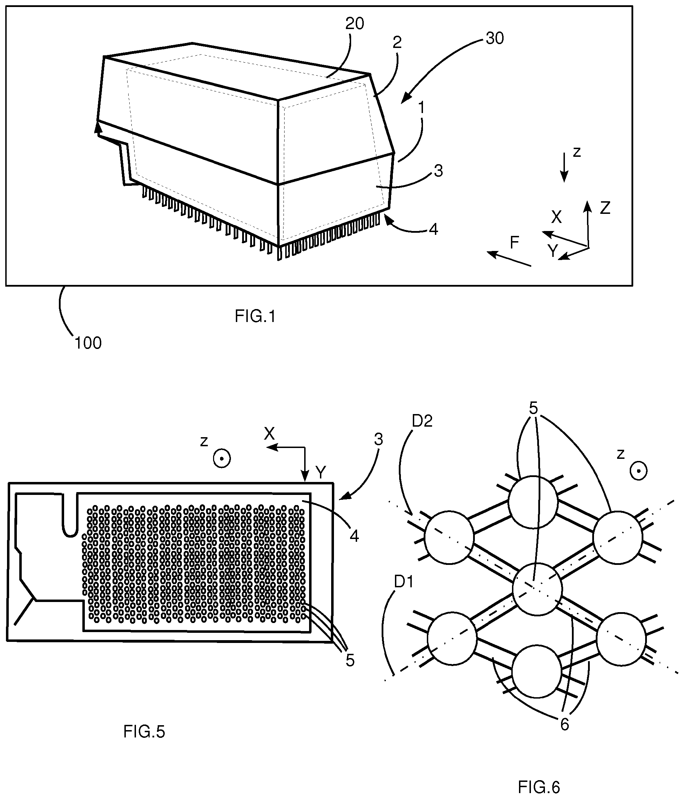

Un premier mode de réalisation d'un véhicule automobile 100 est décrit ci-après en référence aux figures 1, 5 et 6.

La direction selon laquelle le véhicule se déplace habituellement en ligne droite est définie comme étant la direction longitudinale X. Par convention, la direction perpendiculaire à la direction longitudinale X, située dans un plan parallèle à un sol plat, est nommée direction transversale Y. La troisième direction, perpendiculaire aux deux autres, est nommée direction verticale Z.

Le véhicule est de préférence du type électrique ou hybride. En conséquence, le véhicule comprend de préférence un moteur d'entraînement du véhicule et une batterie 20 d'alimentation électrique de ce moteur.

La batterie est avantageusement une batterie de cellules électriques, notamment une batterie de cellules électriques du type lithium-ion.

Le véhicule comprend un ensemble 30 comprenant la batterie 20 et un dispositif de carter 1 destiné à contenir la batterie. Le dispositif de carter est par exemple réalisé en deux parties 2 et 3, notamment deux demicoques assemblées l'une à l'autre. Le dispositif de carter permet de protéger la batterie de l'environnement dans lequel se trouve le véhicule. Toutefois, le dispositif de carter doit aussi permettre le transfert thermique entre la batterie et cet environnement de façon à ce que la batterie puisse être refroidie lorsqu'elle est sollicitée et qu'elle s'échauffe.

Le véhicule comprend aussi un châssis 10 ou une caisse. Ce châssis ou cette caisse comprend avantageusement le dispositif de carter 1 car la batterie est avantageusement montée sur ce châssis ou cette caisse.

De préférence, le dispositif de carter est implanté sous la caisse du véhicule et les parois de ce dispositif de carter sont optimisées de manière à assurer un bon refroidissement passif de la batterie lors du roulage du véhicule quel que soit l'orientation du dispositif de carter relativement au flux d'air circulant sous le véhicule lors du roulage.

Le dispositif de carter 1 comprend une face 4 munie d'une pluralité de picots 5, notamment un réseau de picots 5, soit une face 4 sur laquelle est disposée une pluralité de picots 5, notamment un réseau de picots 5.

La face comprend de préférence plusieurs centaines de picots, par exemple entre 100 et 1000 picots, notamment environ 500 picots ou 600 picots ou 700 picots. Alternativement ou complémentairement, la densité surfacique de picots peut être comprise entre 1500 picots/m$^2$ et 15000 picots/m$^2$, en particulier environ 8000 picots/m$^2$. L'entraxe entre deux picots voisins est compris entre 1 mm et 20 mm, de préférence entre 5 mm et 15 mm, par exemple égal ou environ égal à 10 mm.

La face 4 est de préférence une face inférieure du dispositif de carter. Une fois le dispositif fixé au reste de la caisse ou du châssis, la face 4 est avantageusement orientée horizontalement ou sensiblement horizontalement. Une fois le dispositif fixé au reste de la caisse ou du châssis, la face 4 est avantageusement localisée sous la caisse ou le châssis.

De préférence, la face est plane ou sensiblement plane en faisant abstraction des picots et éventuelles nervures prévus sur la face. Autrement dit, les sommets des différents et/ou les bases des différents picots se trouve sur une surface plane ou sensiblement plane. La surface peut aussi être légèrement concave ou convexe. Par exemple, le rayon de courbure de la face est supérieur à 0,5 m.

Une des fonctions de cette face 4 est de permettre un bon échange thermique entre la batterie et l'environnement extérieur au dispositif de carter, en particulier l'environnement sous-caisse du véhicule. Ceci implique un bon coefficient d'échange thermique entre la face 4 et l'environnement extérieur au dispositif de carter.

Lors du roulage du véhicule, un flux d'air F se déplace relativement au véhicule principalement selon la direction longitudinale X du véhicule. Ceci est en particulier vérifié sous le véhicule où est de préférence implanté le dispositif de carter.

Le flux F est donc de préférence parallèle ou sensiblement parallèle à la face 4.

Le dispositif de carter peut comprendre plusieurs faces munies de picots ou plusieurs faces sur lesquelles sont disposés des picots.

Par « picot », on entend dans tout ce document une saillie de matière ou une conformation en bosse ou en forme de plot, ayant pour but d'augmenter la surface d'échange thermique.

De préférence, les picots s'étendent perpendiculairement ou sensiblement perpendiculairement à la face 4 sur laquelle ils sont disposés. Les picots s'étendent selon un axe z perpendiculaire ou sensiblement perpendiculaire à la face 4. L'axe z constitue la direction longitudinale des picots.

De préférence, les picots ont chacun une forme cylindrique ou sensiblement cylindrique, notamment cylindrique de révolution. Par « cylindrique », on entend, de préférence, dans tout ce document, le sens mathématique du terme, c'est-à-dire caractérisant une forme ayant une surface générée par une génératrice (parallèle à l'axe z) et s'appuyant sur un contour fermé.

En complément ou alternativement, les picots peuvent être plus ou moins coniques. Par exemple, les dimensions transversales des picots peuvent diminuer à mesure qu'on s'approche de leur extrémité libre ou distale.

Alternativement, les picots peuvent avoir toute autre forme, notamment des formes hélicoïdales.

De préférence, les picots ont une dimension longitudinale supérieure 1 mm, notamment comprise entre 5 mm et 30 mm, de préférence environ 10 mm.

En complément, de préférence, les picots ont des dimensions transversales comprises entre 3 mm et 20 mm, notamment entre 5 mm et 10 mm, de préférence environ 6 mm.

La forme de la surface d'échange doit être en correspondance avec le champ aérodynamique sous-caisse, sans pour autant perturber l'aérodynamique globale du véhicule (Cx).

Pour faire face à cette pluralité de localisations possibles et pour répondre à un besoin de modalité d'implantation du dispositif de carter, le dispositif de carter comprend, sur la face 4, un dispositif isotrope optimisé afin de maximiser les échanges convectifs avec l'environnement extérieur.

De préférence, le réseau de picot est un réseau régulier, notamment un réseau régulier basé sur un motif élémentaire en losange ou en triangle ou en carré ou en rectangle.

L'avantage d'un tel réseau repose sur son caractère isotrope ou quasiisotrope qui permet de conserver l'efficacité du refroidissement passif du dispositif de carter, quelle que soit l'orientation du dispositif de carter relativement à l'axe vertical Z du véhicule.

La face 4 est dimensionnée par des calculs thermiques. En effet, un bilan thermique permet, en fonction de la stratégie de refroidissement adoptée, de déduire la valeur cible de la résistance thermique Rth caractérisant l'interface entre l'environnement ambiant et la paroi du dispositif de carter. Cette résistance Rth peut s'exprimer de la manière suivante :

$$Rth = 1 / (h \times S)$$

où

h $(W/m^2/K)$ est le coefficient de convection entre la face et l'environnement, et
S $(m^2)$ est l'aire d'échange thermique de l'interface face-environnement.

Le coefficient de convection h dépend de la vitesse du véhicule v et de la structure de caisse.

En faisant l'hypothèse d'un coefficient de convection moyen proportionnel à la vitesse, il est possible de déterminer la surface d'échange S.

Il est ensuite possible de concevoir plusieurs formes de paroi pour atteindre la surface d'échange souhaitée. Dans la grande majorité des cas, il est nécessaire d'ajouter un relief à cette surface pour atteindre la cible fixée. Celle-ci doit toutefois permettre un passage correct du flux d'air, soit un « arrosage » complet de la surface, pour être réellement efficace. De plus, il convient de garder à l'esprit que cette surface doit perturber le moins possible l'écoulement sous-caisse et l'aérodynamique globale du véhicule. Enfin, la garde au sol doit être respectée.

En prenant en compte l'ensemble de ces contraintes et le dimensionnement explicité ci-dessus, on arrive par exemple à une réalisation de face 4 ayant les caractéristiques suivantes .

Nombre de picots : 617
Hauteur des picots : 10 mm
Diamètre des picots : 6 mm

Avantageusement, des zones locales sans picots peuvent également être créées sur la face 4 pour augmenter localement la turbulence et ainsi améliorer le coefficient d'échange.

De préférence, les picots sont reliés par des nervures 6. Les nervures sont réalisées sur la face 4. Les nervures sont par exemple organisées parallèlement à une première direction D1 et/ou parallèlement à une deuxième direction D2 et/ou parallèlement à une troisième direction.

Avantageusement, la hauteur des nervures (mesurée selon l'axe z) est inférieure à 0.5 fois la dimension longitudinale des picots.

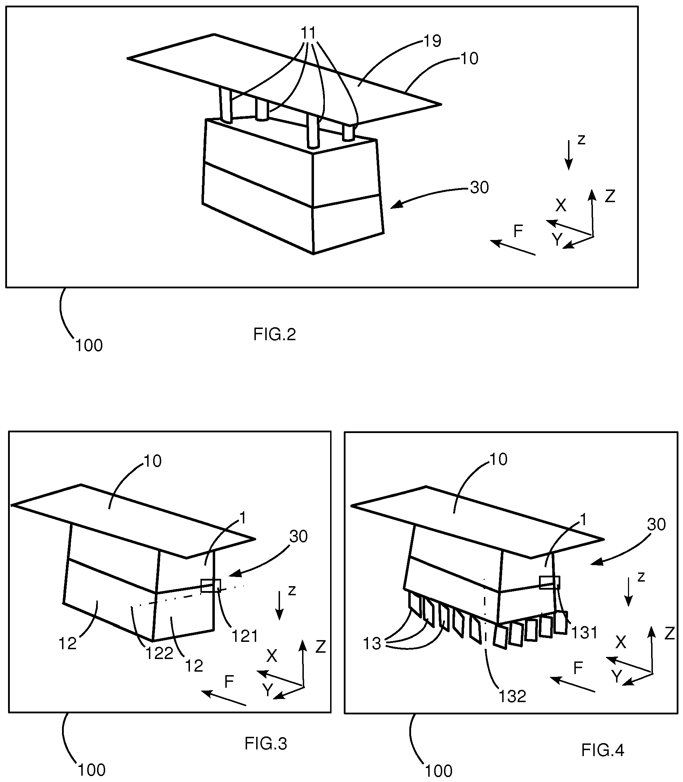

Trois autres modes de réalisation d'un véhicule automobile 100 sont décrits ci-après respectivement en référence aux figures 2, 5 et 6, 3, 5 et 6 et 4, 5 et 6.

Dans ces trois autres modes de réalisation, le véhicule diffère du premier mode de réalisation en ce que le dispositif de carter comprend un élément 11 ; 12 ; 13 de modification de l'exposition de la pluralité de picots au flux F de fluide, notamment au flux d'air, en particulier au flux d'air sous la caisse du véhicule.

En effet, avec les solutions décrites dans ce document, la batterie est refroidie passivement en plaçant le dispositif de carter de batterie dans le flux d'air autour du véhicule. Le fonctionnement de la batterie est donc dépendante des conditions extérieures (température, humidité, etc.), ainsi que du flux d'air. Même si cela est bénéfique la plupart du temps, dans le cas de températures extérieures froides (<5°C), l'exposition prolongée de la batterie dans le flux d'air ambiant en roulage peut être pénalisant pour ses performances (la résistance interne batterie augmentant lorsque sa température diminue).

Pour éviter cet inconvénient, grâce à l'élément 11 ; 12 ; 13 de modification de l'exposition de la pluralité de picots au flux F de fluide, il est possible de moins exposer la face 4 au flux en dessous d'une certaine température du flux F et/ou d'une certaine température de la batterie. Autrement dit, l'intensité du flux F peut être modulée par l'élément de modification.

Le deuxième mode de réalisation d'un véhicule automobile 100 est décrit ci-après en référence aux figures 2, 5 et 6. Dans ce deuxième mode de réalisation, le véhicule diffère du premier mode de réalisation en ce que le dispositif de carter comprend un élément 11 de modification de l'exposition au flux F, cet élément comprenant au moins un actionneur 11 de déplacement de la face munie de la pluralité de picots.

L'au moins un actionneur peut comprendre un ou plusieurs vérins (hydrauliques ou mécaniques). Ainsi, la position du dispositif de carter peut être réglée ou modifiée verticalement, relativement au reste 19 du châssis ou de la caisse, de manière à faire varier l'exposition du dispositif de carter au flux F. Si besoin, il est possible de remonter le dispositif de carter entièrement dans le véhicule pour l'isoler au maximum du flux F.

Le troisième mode de réalisation d'un véhicule automobile 100 est décrit ci-après en référence aux figures 3, 5 et 6. Dans ce troisième mode de réalisation, le véhicule diffère du premier mode de réalisation en ce que le dispositif de carter comprend un élément 11 de modification de l'exposition au flux F, cet élément comprenant au moins un volet 12 déplaçable en translation ou en rotation.

Ainsi, le dispositif de carter comprend un actionneur 121 de déplacement de l'au moins un volet 12 ; 13 relativement à la face 4 munie de la pluralité de picots.

Par exemple, l'au moins un volet est déplaçable en rotation autour d'un axe parallèle ou sensiblement parallèle à la face 4.

Alternativement, l'au moins un volet est déplaçable parallèlement à l'axe z.

Le quatrième mode de réalisation d'un véhicule automobile 100 est décrit ci-après en référence aux figures 4, 5 et 6. Dans ce quatrième mode de réalisation, le véhicule diffère du premier mode de réalisation en ce que le dispositif de carter comprend un élément 11 de modification de l'exposition au flux F, cet élément comprenant au moins un volet 12 déplaçable en rotation autour d'un axe 132 parallèle à la direction z d'extension des picots.

Les avantages des solutions décrites précédemment sont les suivants :

- Refroidissement de la batterie de manière passive, c'est-à dire sans utiliser de circuit de refroidissement muni d'un circulateur. Le refroidissement passif permettant de limiter la masse, de ne pas consommer d'énergie pour faire circuler le fluide de refroidissement, de limiter les coûts et enfin d'améliorer la fiabilité ;

- Positionnement du dispositif de carter hors de l'espace interne du véhicule, d'où un gain de place (pour d'autres système du véhicule ou pour les passagers) ;

- Batterie facilement accessible d'où une maintenance facilitée ;

- Aucun dispositif de canalisation de fluide nécessaire ;

- Les solutions ont été décrites sous un châssis ou sous une caisse. Elles restent toutefois envisageables sur le toit du véhicule, notamment dans un coffre de toit avec passage d'air.

**Revendications**

1. Dispositif de carter (1) pour batterie (20), notamment pour batterie de véhicule automobile (100), le dispositif de carter comprenant une face (4) munie d'une pluralité de picots (5), notamment une face (4) munie d'un réseau de picots (5), **caractérisé en ce que** le dispositif comprend un élément (11 ; 12 ; 13) de modification de l'exposition de la pluralité de picots à un flux (F) de fluide, notamment à un flux d'air, l'élément de modification de l'exposition comprenant au moins un actionneur (11) de déplacement de la face munie de la pluralité de picots.

2. Dispositif de carter selon la revendication 1, **caractérisé en ce que** la face est plane ou sensiblement plane et/ou **en ce que** la face est horizontale ou sensiblement horizontale.

3. Dispositif de carter selon l'une des revendications précédentes, **caractérisé en ce que** les picots s'étendent perpendiculairement ou sensiblement perpendiculairement à la face.

4. Dispositif de carter selon l'une des revendications précédentes, **caractérisé en ce que** les picots ont une dimension longitudinale supérieure à 1 mm, notamment comprise entre 5 mm et 30 mm, de préférence environ 10 mm et/ou **en ce que** les picots ont une dimension transversale comprise entre 3 mm et 20 mm, notamment entre 5 mm et 10 mm, de préférence environ 6 mm.

5. Dispositif de carter selon l'une des revendications précédentes, **caractérisé en ce que** les picots ont chacun une forme cylindrique ou sensiblement cylindrique.

6. Dispositif de carter selon l'une des revendications précédentes, **caractérisé en ce que** le réseau de picot est un réseau régulier, notamment un réseau régulier basé sur un motif en losange ou en triangle ou en carré ou en rectangle.

7. Dispositif de carter selon l'une des revendications précédentes, **caractérisé en ce que** les picots sont reliés par des nervures (6), notamment des nervures organisées parallèlement à une première direction (D1) et/ou à une deuxième direction (D2) et/ou à une troisième direction.

8. Dispositif de carter selon la revendication précédente, **caractérisé en ce que** les nervures ont une hauteur inférieure à 0.5 fois la dimension longitudinale des picots.

9. Dispositif de carter selon la revendication 1, **caractérisé en ce que** l'élément de modification de l'exposition comprend au moins un actionneur (121; 131) de déplacement d'un volet (12; 13) relativement à la face munie de la pluralité de picots.

10. Dispositif de carter selon la revendication précédente, **caractérisé en ce que** le volet (12 ; 13) est déplaçable en translation ou en rotation.

11. Dispositif de carter selon la revendication précédente, **caractérisé en ce que** le volet est déplaçable en rotation autour d'un axe (122) perpendiculaire à la direction (z) d'extension des picots ou autour d'un axe (132) parallèle à la direction d'extension des picots.

12. Ensemble (30) comprenant une batterie (20) et un dispositif de carter (1) selon l'une des revendications précédentes.

13. Châssis (10) ou caisse de véhicule automobile comprenant un dispositif de carter (1) selon l'une des revendications 1 à 11 et/ou un ensemble selon la revendication précédente.

14. Véhicule automobile (100) comprenant un dispositif de carter (1) selon l'une des revendications 1 à 11 et/ou un ensemble selon la revendication 12 et/ou un châssis ou caisse selon la revendication précédente.

**Patentansprüche**

1. Gehäusevorrichtung (1) für eine Batterie (20), insbesondere für eine Kraftfahrzeugbatterie (100), wobei die Gehäusevorrichtung eine Seite (4) umfasst, die mit mehreren Noppen (5) versehen ist, insbesondere eine Seite (4), die mit einem Raster von Noppen (5) versehen ist, **dadurch gekennzeichnet, dass** die Vorrichtung ein Element (11; 12; 13) zur Veränderung der Exposition der mehreren Noppen gegenüber einem Fluidstrom (F), insbesondere einem Luftstrom, umfasst, wobei das Element zur Modifikation der Exposition mindestens einen Aktuator (11) zur Verschiebung der mit den mehreren Noppen versehenen Seite umfasst.

2. Gehäusevorrichtung nach Anspruch 1, **dadurch gekennzeichnet, dass** die Seite eben oder im Wesentlichen eben ist und/oder dass die Seite horizontal oder im Wesentlichen horizontal ist.

3. Gehäusevorrichtung nach einem der vorangehenden Ansprüche, **dadurch gekennzeichnet, dass** sich die Noppen senkrecht oder im Wesentlichen senkrecht zur Seite erstrecken.

4. Gehäusevorrichtung nach einem der vorangehenden Ansprüche, **dadurch gekennzeichnet, dass** die Noppen eine Längsabmessung von mehr als 1 mm, insbesondere zwischen 5 mm und 30 mm, vorzugsweise etwa 10 mm, aufweisen und/oder dass die Noppen eine Querabmessung zwischen 3 mm und 20 mm, insbesondere zwischen 5 mm und 10 mm, vorzugsweise etwa 6 mm, aufweisen.

5. Gehäusevorrichtung nach einem der vorangehenden Ansprüche, **dadurch gekennzeichnet, dass** die Noppen jeweils eine zylindrische oder im Wesentlichen zylindrische Form aufweisen.

6. Gehäusevorrichtung nach einem der vorangehenden Ansprüche, **dadurch gekennzeichnet, dass** das Noppenraster ein regelmäßiges Raster ist, insbesondere ein regelmäßiges Raster, das auf einem Rauten- oder Dreiecks- oder Quadrat- oder Rechteckmuster basiert.

**7.** Gehäusevorrichtung nach einem der vorangehenden Ansprüche, **dadurch gekennzeichnet, dass** die Noppen durch Rippen (6) verbunden sind, insbesondere Rippen, die parallel zu einer ersten Richtung (D1) und/oder zu einer zweiten Richtung (D2) und/oder zu einer dritten Richtung angeordnet sind.

**8.** Gehäusevorrichtung nach dem vorangehenden Anspruch, **dadurch gekennzeichnet, dass** die Rippen eine Höhe aufweisen, die kleiner als das 0,5-fache der Längsabmessung der Noppen ist.

**9.** Gehäusevorrichtung nach Anspruch 1, **dadurch gekennzeichnet, dass** das Element zur Modifikation der Exposition mindestens einen Aktuator (121; 131) zur Verschiebung einer Klappe (12; 13) relativ zu der mit den mehreren Noppen versehenen Seite umfasst.

**10.** Gehäusevorrichtung nach dem vorangehenden Anspruch, **dadurch gekennzeichnet, dass** die Klappe (12; 13) translatorisch oder rotatorisch verschiebbar ist.

**11.** Gehäusevorrichtung nach dem vorangehenden Anspruch, **dadurch gekennzeichnet, dass** die Klappe um eine zur Erstreckungsrichtung (z) der Noppen senkrechte Achse (122) oder um eine zur Erstreckungsrichtung der Noppen parallele Achse (132) rotatorisch verschiebbar ist.

**12.** Baugruppe (30), umfassend eine Batterie (20) und eine Gehäusevorrichtung (1) nach einem der vorangehenden Ansprüche.

**13.** Fahrgestell (10) oder Karosserie eines Kraftfahrzeugs, umfassend eine Gehäusevorrichtung (1) nach einem der Ansprüche 1 bis 11 und/oder eine Baugruppe nach dem vorangehenden Anspruch.

**14.** Kraftfahrzeug (100) umfassend eine Gehäusevorrichtung (1) nach einem der Ansprüche 1 bis 11 und/oder eine Baugruppe nach Anspruch 12 und/oder ein Fahrgestell oder eine Karosserie nach dem vorangehenden Anspruch.

**Claims**

**1.** Housing device (1) for a battery (20), in particular for a battery of a motor vehicle (100), the housing device comprising a face (4) provided with a plurality of spikes (5), in particular a face (4) provided with an array of spikes (5), **characterized in that** the device comprises an element (11; 12; 13) for modifying the exposure of the plurality of spikes to a flow (F) of fluid, in particular to a flow of air, the exposure modifying element comprising at least one actuator (11) for moving the face provided with the plurality of spikes.

**2.** Housing device according to Claim 1, **characterized in that** the face is flat or substantially flat, and/or **in that** the face is horizontal or substantially horizontal.

**3.** Housing device according to either of the preceding claims, **characterized in that** the spikes extend perpendicularly or substantially perpendicularly to the face.

**4.** Housing device according to one of the preceding claims, **characterized in that** the spikes have a longitudinal dimension greater than 1 mm, in particular between 5 mm and 30 mm, preferably around 10 mm, and/or **in that** the spikes have a transverse dimension of between 3 mm and 20 mm, in particular between 5 mm and 10 mm, preferably around 6 mm.

**5.** Housing device according to one of the preceding claims, **characterized in that** the spikes each have a cylindrical or substantially cylindrical shape.

**6.** Housing device according to one of the preceding claims, **characterized in that** the array of spikes is a regular array, in particular a regular array based on a diamond-shaped or triangular or square or rectangular pattern.

**7.** Housing device according to one of the preceding claims, **characterized in that** the spikes are connected by ribs (6), in particular ribs organized parallel to a first direction (D1) and/or to a second direction (D2) and/or to a third direction.

**8.** Housing device according to the preceding claim, **characterized in that** the ribs have a height less than 0.5 times the longitudinal dimension of the spikes.

**9.** Housing device according to Claim 1, **characterized in that** the exposure modifying element comprises at least one actuator (121; 131) for moving a flap (12; 13) relative to the face provided with the plurality of spikes.

**10.** Housing device according to the preceding claim, **characterized in that** the flap (12; 13) is movable in translation or in rotation.

**11.** Housing device according to the preceding claim, **characterized in that** the flap is movable in rotation about an axis (122) perpendicular to the direction (z) of extension of the spikes or about an axis (132) parallel to the direction of extension of the spikes.

**12.** Assembly (30) prising a battery (20) and a housing device (1) according to one of the preceding claims.

13. Motor vehicle chassis (10) or bodyshell comprising a housing device (1) according to one of Claims 1 to 11 and/or an assembly according to the preceding claim.

14. Motor vehicle (100) comprising a housing device (1) according to one of Claims 1 to 11 and/or an assembly according to Claim 12 and/or a chassis or bodyshell according to the preceding claim.

FIG.1

FIG.5

FIG.6

FIG.2

FIG.3

FIG.4

**EP 3 826 871 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2999809 A1
- US 2015200430 A1